Europäisches Patentamt

European Patent Office

Office européen des brevets

(11) Numéro de publication: **0 252 056**
**A2**

## (12) DEMANDE DE BREVET EUROPEEN

(21) Numéro de dépôt: **87870075.6**

(22) Date de dépôt: **26.05.87**

(51) Int. Cl.⁴: **B 27 F 1/08**

(30) Priorité: **04.07.86 BE 216882**

(43) Date de publication de la demande:
**07.01.88 Bulletin 88/01**

(84) Etats contractants désignés:
**AT BE CH DE FR GB LI SE**

(71) Demandeur: **Delbeke, James Paul**
**44, avenue Lequime**
**1640 Rhode-Saint-Genèse (BE)**

(72) Inventeur: **Delbeke, James Paul**
**44, avenue Lequime**
**1640 Rhode-Saint-Genèse (BE)**

(74) Mandataire: **Vigneron, Jean**
**Cabinet VIGNERON 30 avenue Eugène Godaux**
**B-1150 Bruxelles (BE)**

(54) Procédé pour pratiquer une découpe dans une pièce de bois et installation pour la mise en oeuvre de ce procédé.

(57) Procédé pour pratiquer, en particulier dans une pièce de bois 1, une découpe 2, soit en bout de bois, soit en plein bois, à l'aide de moyens, tels que scies circulaires 3,4,4′, agencées, suivant l'axe longitudinal 5 de la pièce de bois 1 et transversalement à cet axe, pour entailler ladite pièce de bois, lorsque celle-ci entre en contact avec les scies, suivant au moins deux plans sécants 7, 8 et installation pour la mise en oeuvre de ce procédé.

FIG.14.

EP 0 252 056 A2

**Description**

PROCEDE POUR PRATIQUER UNE DECOUPE DANS UNE PIECE DE BOIS ET INSTALLATION POUR LA MISE EN OEUVRE DE CE PROCEDE.

La présente invention a pour objet un procédé pour pratiquer, en particulier dans une pièce de bois, une découpe, à l'aide de moyens tels que scies circulaires agencés, suivant l'axe longitudinal de la pièce de bois et transversalement à cet axe, pour entailler la pièce de bois, lorsque celle-ci est mise en contact avec les scies par déplacement relatif suivant une direction perpendiculaire audit axe longitudinal, suivant au moins deux plans sécants.

Jusqu'à présent, on est limité, pour la réalisation d'une découpe en bout de bois, à la dimension de la partie libre de la scie circulaire, pratiquant l'entaille suivant l'axe longitudinal de la pièce de bois, qui est en forme de couronne circulaire délimitée par la périphérie de la scie et le cercle dans lequel est inscrite la projection sur la scie de ses moyens de fixation et d'entraînement et ce, afin que ces derniers moyens puissent passer librement à côté de l'extrémité de la pièce de bois à partir de laquelle est réalisée ladite découpe.

L'invention a pour but de remédier à cet inconvénient et de procurer un procédé permettant de réaliser une découpe en bout de bois dont la dimension, suivant l'axe longitudinal du bois, est supérieure à la dimension précitée de la partie libre de la scie circu laire et peut même soit atteindre le diamètre de cette scie circulaire, soit être supérieure au diamètre de cette dernière. De plus, le procédé suivant l'invention permet de réaliser des découpes, en plein bois, dont la dimension, prise suivant l'axe longitudinal de la pièce de bois, correspond au diamètre de la scie circulaire pratiquant l'entaille suivant cet axe longitudinal.

A cet effet, suivant l'invention, ledit procédé consiste, pour réaliser une découpe dont la dimension prise suivant l'axe longitudinal de la pièce de bois est supérieure à la dimension de la partie libre de la scie circulaire qui réalise l'entaille suivant l'axe longitudinal de la pièce de bois, partie libre qui est en forme de couronne circulaire délimitée par la périphérie de la scie et le cercle dans lequel est inscrite la projection sur la scie de ses moyens de fixation et d'entraînement, à entailler la pièce de bois, avant que celle-ci soit mise en contact avec les moyens de fixation et d'entraînement susdits, transversalement à son axe longitudinal et sur une distance qui correspond à la dimension de la découpe à pratiquer prise transversalement à cet axe longitudinal , suivant au moins deux plans parallèles au plan comprenant une tangente à la périphérie de la scie qui s'étend perpendiculairement à l'axe longitudinal de la pièce de bois, le plan parallèle le plus éloigné des moyens de fixation et d'entraînement précités de la scie circulaire coïncidant avec l'entaille de la découpe s'étendant transversalement à l'axe longitudinal susdit, la distance séparant les deux plans parallèles étant inférieure à la distance séparant les cercles intérieur et extérieur de la couronne circulaire précitée.

Suivant une forme de réalisation avantageuse de l'invention, le procédé consiste, dans le cas d'une découpe en bout de bois et pour réaliser une découpe dont la dimension prise suivant l'axe longitudinal de la pièce de bois qui est supérieure au diamètre de la scie circulaire qui réalise l'entaille suivant cet axe longitudinal, à entailler la pièce de bois, transversalement à son axe longitudinal et sur une distance qui correspond à la dimension de la découpe à pratiquer prise transversalement à cet axe longitudinal, suivant les deux plans parallèles précités qui sont séparés de l'extrémité du bois à partir de laquelle la découpe est réalisée par une distance supérieure au diamètre de la scie circulaire, à entailler la pièce de bois de part en part à l'aide de la scie à partir de son extrémité susdite, à interrompre le mouvement relatif précité de la pièce de bois et de la scie avant que les moyens de fixation et d'entraînement de celle-ci entrent en contact avec la pièce de bois, à déplacer la scie suivant l'axe longitudinal de la pièce de bois jusqu'au moment où sa périphérie atteint le plan parallèle précité le plus éloigné de l'extrémité susdite de la pièce de bois, à déclencher à nouveau le mouvement relatif de la pièce de bois et de la scie suivant la direction susdite qui est perpendiculaire à l'axe longitudinal de la pièce de bois.

L'invention concerne également une installation pour la mise en oeuvre du procédé susdit.

Suivant l'invention, cette installation comprend une scie circulaire, dont l'axe est perpendiculaire à l'un des deux plans sécants susdits , destinée à réaliser l'entaille suivant l'axe longitudinal de la pièce de bois à découper, des moyens, tels que scies circulaires, dont les axes sont perpendiculaires à l'autre plan sécant, ou fraises, dont les axes sont soit parallèles soit perpendiculaires à ce dernier plan sécant, destinés à réaliser les entailles s'étendant transversalement à l'axe longitudinal de la pièce de bois et des moyens agencés pour soit déplacer la pièce de bois, parallèlement à elle-même et suivant une direction perpendiculaire aux axes des scies circulaires ou fraises, vers ces dernières qui sont fixes, soit déplacer les scies ou fraises, suivant une direction perpendiculaire à l'axe longitudinal de la pièce de bois, cette dernière étant fixe, les moyens réalisant les entailles transversales à l'axe longitudinal de la pièce de bois et la scie réalisant l'entaille suivant cet axe longitudinal étant décalés de manière telle que les entailles transversales à l'axe longitudinal susdit sont réalisées avant que les moyens de fixation et d'entraînement de la scie circulaire réalisant l'entaille suivant l'axe longitudinal de la pièce de bois entrent en contact avec cette dernière.

D'autres détails et particularités de l'invention ressortiront de la description des dessins annexés au présent mémoire et qui illustrent, à titre d'exemples non limitatifs, le procédé suivant l'invention ainsi que des formes de réalisation particulières de l'installation suivant l'invention.

Les figures 1 à 3 sont des vues schématiques, en plan, illustrant les diverses phases du procédé connu, ainsi que l'installation pour sa mise en oeuvre, pour réaliser une découpe en bout de bois.

La figure 4 est une vue en élévation correspondant à la figure 3.

Les figures 5 à 7 sont des vues, analogues aux figures 1 à 3, qui illustrent un procédé et une installation qui permettraient d'obtenir une découpe dont la dimension, suivant l'axe longitudinal de la pièce de bois, serait supérieure à la dimension obtenue suivant le procédé connu susdit.

La figure 8 est une vue analogue à la figure 4 et correspondant à la figure 7.

Les figures 9 à 14 sont des vues schématiques, en perspective, illustrant les diverses phases du procédé suivant l'invention, ainsi que l'installation pour sa mise en oeuvre, pour réaliser une découpe en bout de bois dont la dimension, prise parallèlement à l'axe longitudinal de la pièce de bois, est supérieure à la dimension susdite de la partie libre de la scie qui réalise l'entaille suivant cet axe longitudinal et inférieure au diamètre de cette scie.

La figure 15 est une vue schématique , en plan, illustrant le procédé et l'installation pour réaliser une découpe en plein bois.

La figure 16 est une vue en élévation correspondant à la figure 15.

La figure 17 est une vue schématique, en plan, illustrant une variante du procédé et de l'installation montrés aux figures 9 à 14 et qui permettent de réaliser une découpe en bout de bois dont la dimension, prise parallèlement à l'axe longitudinal de la pièce de bois, est égale au diamètre de la scie qui réalise l'entaille suivant cet axe longitudinal.

La figure 18 est une vue en élévation correspondant à la figure 17.

La figure 19 est une vue schématique, en plan, illustrant une autre variante du procédé et de l'installation montrés aux figures 9 à 14.

La figure 20 est une vue en élévation correspondant à la figure 19.

Les figures 21 et 22 sont des vues schématiques en élévation montrant deux autres exemples de découpe en bout de bois pouvant être obtenus à l'aide du procédé et de l'installation suivant l'invention.

La figure 23 est une vue analogue aux figures 21 et 22 et montre un autre exemple de découpe en plein bois pouvant être obtenue à l'aide du procédé et de l'installation suivant l'invention.

Les figures 24 à 29 sont des vues analogues aux figures 9 à 14 et illustrent les diverses phases du procédé suivant l'invention, ainsi que l'installation pour sa mise en oeuvre, pour réaliser une découpe en bout de bois dont la dimension, prise parallèlement à l'axe longitudinal de la pièce de bois, est supérieure au diamètre de la scie qui réalise l'entaille suivant cet axe longitudinal.

Dans les différentes figures, les mêmes notations de référence désignent des éléments identiques ou analogues.

Aux dessins et dans la description qui va suivre, on a considéré la pièce de bois mobile et les scies et fraises généralement fixes, mais il doit bien être entendu que, suivant l'invention, on pourrait tout aussi bien avoir la pièce de bois fixe et les scies et fraises mobiles.

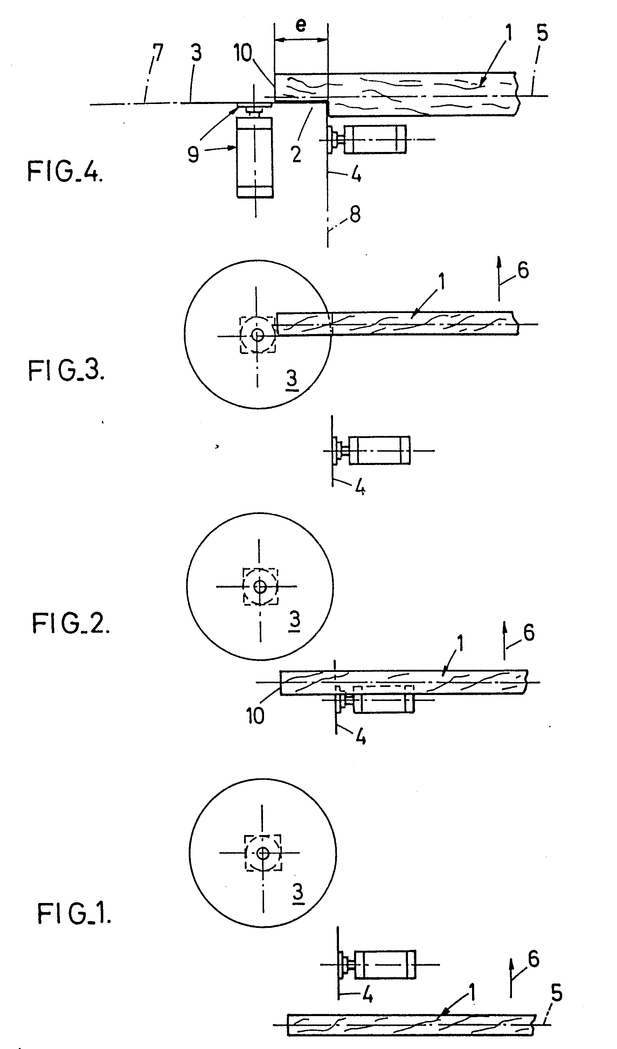

Comme montré aux figures 1 à 4, le procédé et l'installation connus permettent de pratiquer, dans une piece de bois 1 et en bout de bois, une découpe 2 à l'aide de deux scies circulaires 3 et 4 qui sont agencées respectivement suivant l'axe longitudinal 5 de la pièce de bois 1 et transversalement à cet axe 5. Ces scies 3 et 4 entaillent successivement la pièce de bois 1, lorsqu'elle se déplace parallèlement à elle-même et suivant une direction perpendiculaire à son axe longitudinal 5 indiquée par la flèche 6, suivant deux plans sécants de traces 7 et 8. On constate que la dimension e de la découpe est limitée, pour que les moyens de fixation et d'entraînement 9 de la scie 3 puissent passer à côté de l'extrémité 10 de la pièce de bois 1, à la dimension, prise radialement, de la partie libre de la scie 3 comprise entre sa périphérie et la projection sur la scie desdits moyens.

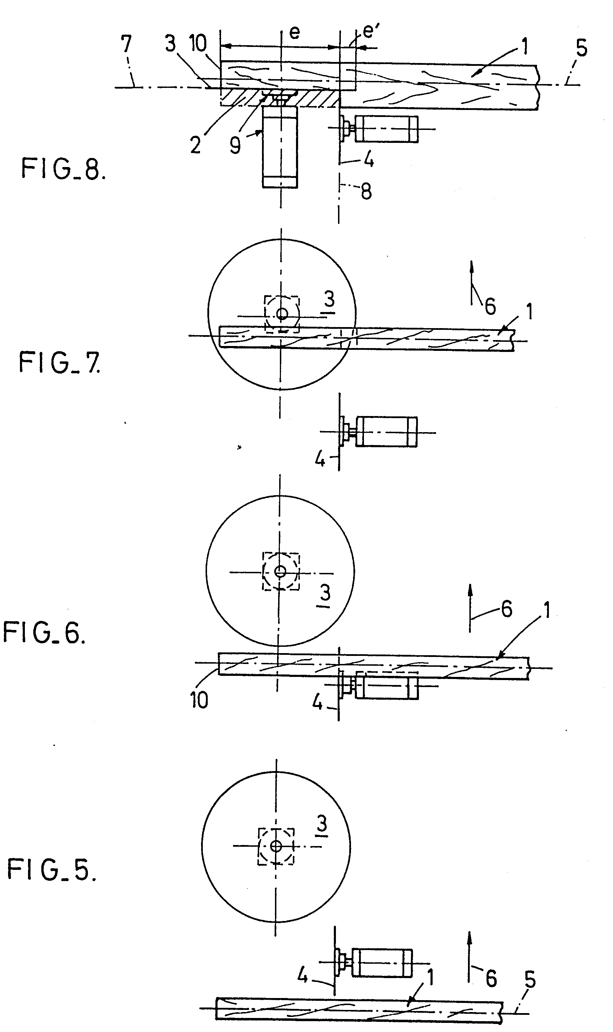

On pourrait, pour augmenter cette dimension e de la découpe, disposer les scies 3 et 4 comme montré aux figures 5 à 8 pour que la partie hachurée (voir figure 8) de la pièce de bois soit déjà coupée et évacuée par gravité, pour réaliser la découpe 2, lorsque ladite pièce de bois 1, déplacée suivant la flèche 6, arrive au niveau des moyens 9 précités de la scie 3. Ce procédé n'est toutefois pas valable techniquement, car la scie 3 entaille la pièce de bois, au-delà de la découpe 2 et sur une distance e', ce qui réduit notablement sa resistance.

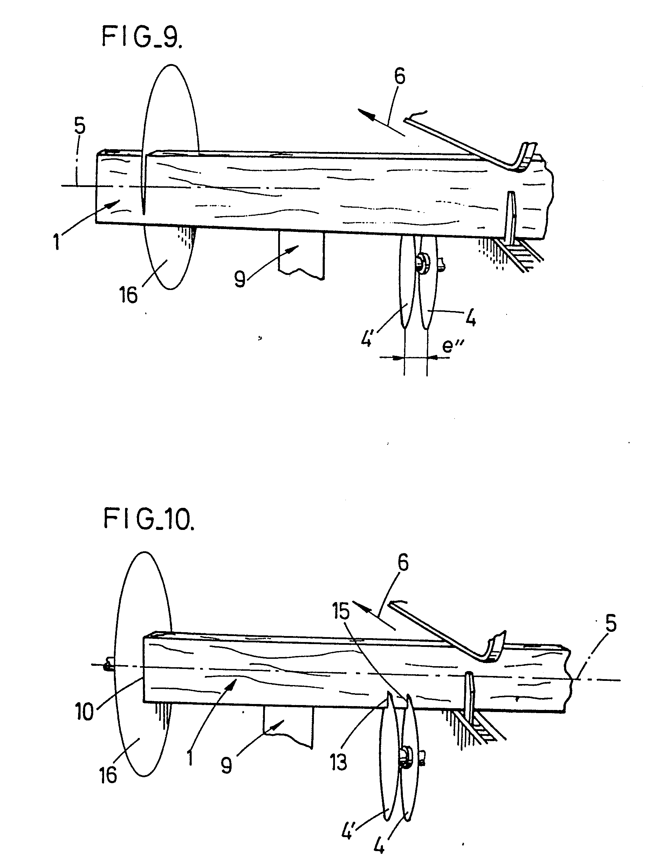

Comme montré aux figures 9 à 14, le procédé et l'installation suivant l'invention permettent d'augmenter la dimension e de la découpe 2 jusqu'à une valeur légèrement inférieure au diamètre de la scie circulaire 3 et ce, sans entailler le bois au-delà de la découpe 2 comme cela est le cas suivant le procédé illustré aux figures 5 à 8. Pour ce faire, la scie circulaire 4 est disposée dans le plan sécant 8 qui est tangent à la scie circulaire 3 et une seconde scie circulaire 4', de même diamètre que la scie 4 est montée sur l'arbre 11 de cette scie 4 à une distance e'' de celle-ci qui est telle que, lorsque la pièce de bois 1, qui se déplace suivant la flèche 6, arrive au niveau des moyens de fixation et d'entraînement 9 de la scie circulaire 3, la portion de bois 12 comprise entre l'extrémité 10 de la pièce de bois 1, la scie circulaire 3 et l'entaille 13 réalisée par la scie circulaire 4' est déjà coupée par ladite scie 3 et éliminée par gravité, de sorte que les moyens 9 peuvent passer librement dans cet espace libéré lorsque la pièce de bois 1 continue sa progression, suivant la flèche 6, pour découper la portion de bois 14 comprise entre l'entaille 13 et l'entaille 15 réalisées préalablement par les scies coaxiales 4' et 4.

L'installation suivant l'invention comprend, comme montré aux figures 9 à 14, une scie circulaire 16 dont l'axe fixe est parallèle à l'axe longitudinal 5

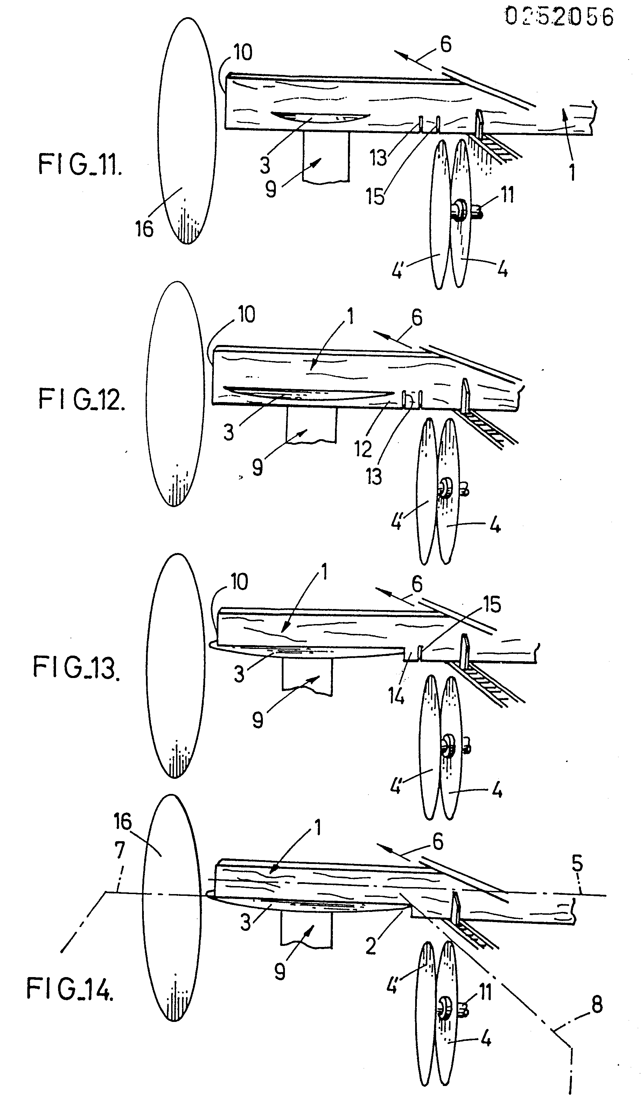

de la pièce de bois 1 et qui est destiné (voir figures 9 et 10) à trancher l'extrémité de la pièce de bois 1 pour obtenir l'extrémité 10 susdite, parfaitement perpendiculaire à l'axe 5, à partir de laquelle sera pratiquée la découpe 2. Après le sciage de cette extrémité, la pièce de bois 1, entraînée suivant la flèche 6, entre en contact avec les scies circulaires 4 et 4'pour réaliser simultanément les entailles 15 et 13 (figure 10). Ensuite, la pièce de bois 1 qui continue à progresser est attaquée par la scie circulaire 3 (figures 11 et 12).

Avant que la pièce de bois 1 vienne heurter les moyens de fixation et d'entraînement 9 de la scie 3, celle-ci a déjà coupé la portion de bois 12 susdite (figure 13) et la pièce de bois 1 peut librement poursuivre sa progression suivant la flèche 6, pour découper la portion de bois 14 susdite ( figure 14) pour réaliser entièrement la découpe 2. La distance e″ qui sépare les scies circulaires 4 et 4′ est inférieure à la dimension susdite de la partie libre de la scie circulaire 3 et est fonction de la dimension du bois prise parallèlement à sa direction de déplacement ainsi que du diamètre de la scie 3 et des dimensions de ses moyens 9.

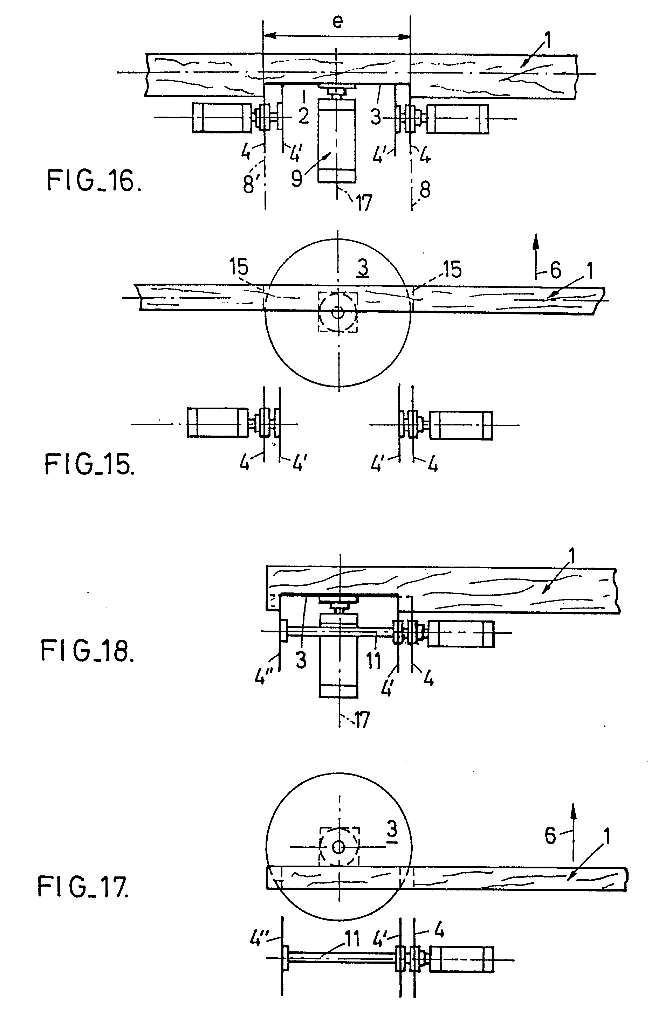

Suivant l'invention et comme montré aux figures 15 et 16, on dispose, pour réaliser une découpe 2 en plein bois, deux paires de scies identiques 4,4′ qui sont coaxiales et disposées symétriquement par rapport au plan passant par l'axe 17 de la scie circulaire 3 et qui est parallèle à la direction de déplacement de la pièce de bois 1, ces scies étant situées dans les plans 8 et 8′ sécants au plan 7 qui sont tangents et diamétralement opposés à la scie circulaire 3, de sorte que la dimension e de la découpe 2 est égale au diamètre de la scie circulaire 3. La distance qui sépare les scies circulaires 4 et 4′ de chaque paire de scies susdites est inférieure à la dimension susdite de la partie libre de la scie circulaire 3. Les scies 4 et 4′ et la scie 3 sont décalées de manière telle que les entailles 13 et 15 sont pratiquées simultanément dans la pièce de bois 1 par lesdites scies 4 et 4′ avant que la scie circulaire 3 attaque la pièce de bois 1.

Suivant l'invention et comme montré aux figures 17 et 18, on dispose, pour réaliser une découpe 2, en bout de bois, dont la dimension e est égale au diamètre de la scie circulaire 3, une scie circulaire 4″, identique aux scies 4 et 4′ susdites, sur l'arbre 11 de ces dernières. Les scies 4′ et 4″ sont disposées sur cet arbre 11, symétriquement par rapport au plan passant par l'axe 17 de la scie circulaire 3 et qui est parallèle à la direction de déplacement de la pièce de bois 1.

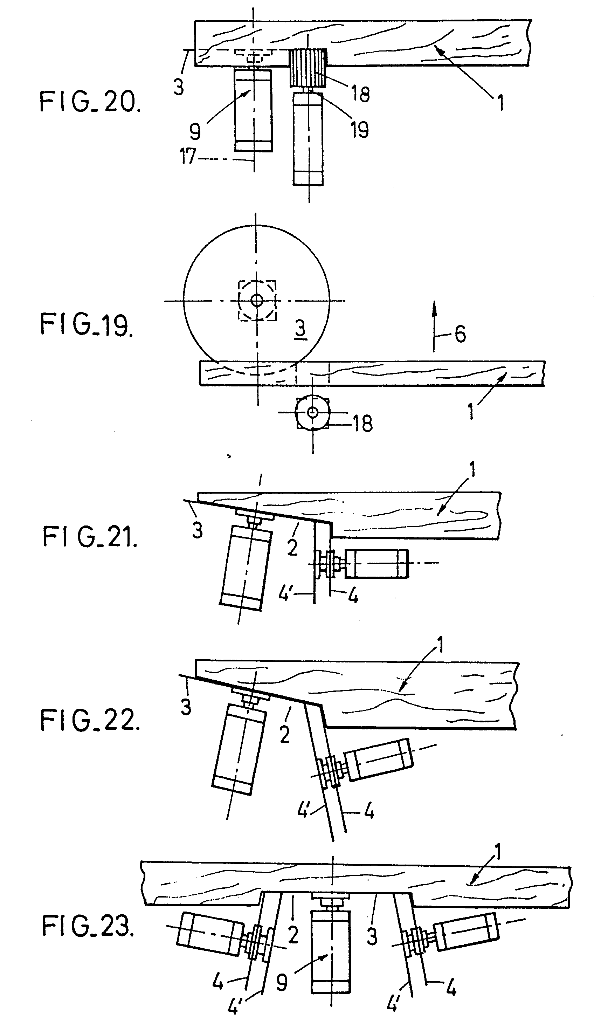

Suivant l'invention et comme montré aux figures 19 et 20, on pourrait remplacer, pour réaliser la découpe 2 susdite en bout de bois, les scies circulaires 4 et 4′ précitées par une fraise 18 dont l'arbre 19 est parallèle à l'axe 17 de la scie circulaire 3, cette fraise 18 réalisant alors les entailles 13 et 15 et éliminant le bois compris entre ces dernières. Toutefois l'utilisation des scies circulaires 4 et 4′ est préférable à celle d'une fraise 18 car leur progression dans le bois est plus rapide. Il est évident que la scie 4″ précitée pourrait également être remplacée par une fraise dont le diamètre serait au moins égal à la distance séparant cette scie 4″ de l'extrémité 10 du bois, tout comme chacune des paires de scies 4 et 4′, illustrées aux figures 15 et 16, pourrait être remplacée par une fraise.

Toutes les découpes 2 décrites ci-dessus sont réalisées suivant des plans sécants 7 et 8 ou 7,8 et 8′ qui sont perpendiculaires entre eux, le plan 7 étant parallèle à l'axe longitudinal 5 de la pièce de bois 1. Toutefois, on pourrait, suivant l'invention, prévoir une installation dans laquelle les axes 17 et 11 des scies circulaires 3,4,4′et 4″ sont orientables pour obtenir des découpes telles qu'illustrées aux figures 21 à 23. Dans ce cas, les diamètres des scies circulaires 4,4′et 4″ sont différents et choisis de telle sorte que la périphérie de toutes ces scies ait un point commun avec le plan 7 précité. La position des scies est bien entendu réglable afin de pouvoir modifier les dimensions de la découpe.

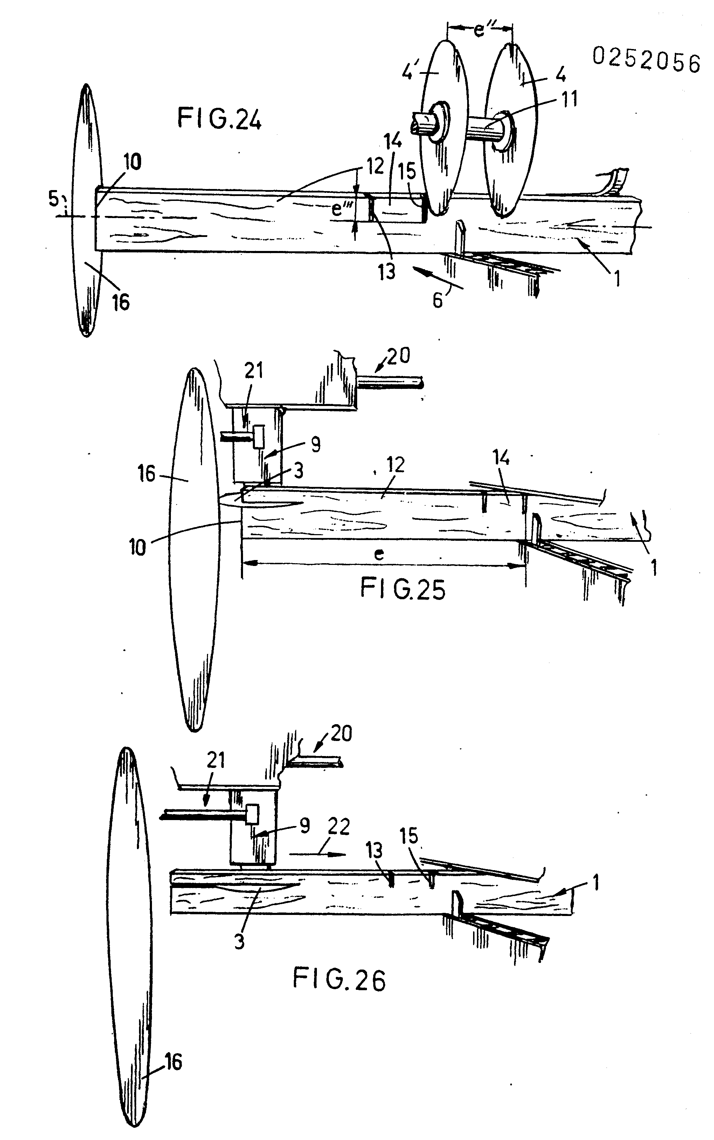

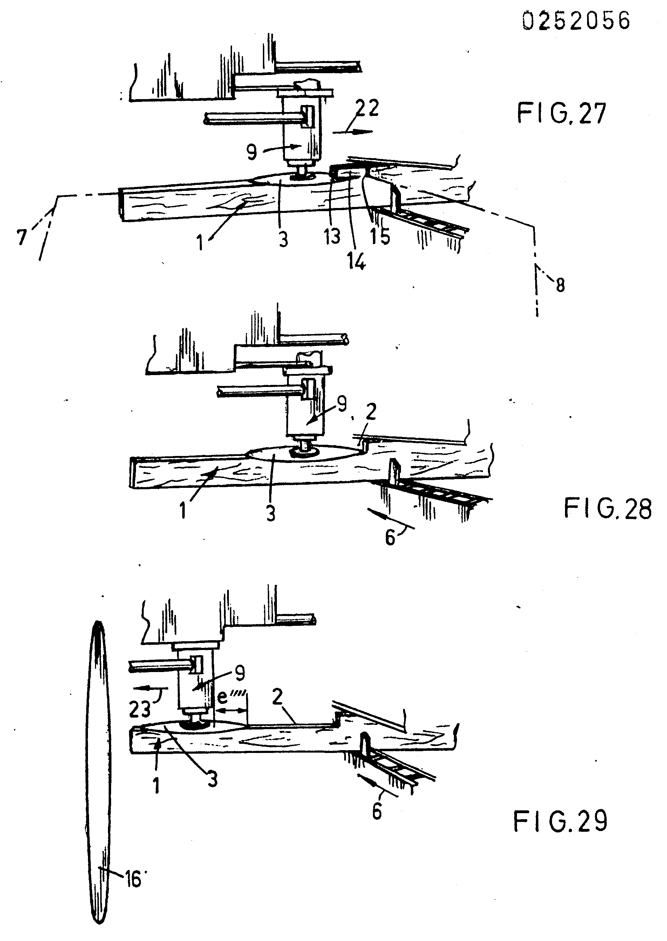

Comme montré aux figures 24 à 29, le procédé et l'installation suivant l'invention permettent de pratiquer une découpe 2 dont la dimension e est largement supérieure au diamètre de la scie 3 réalisant l'entaille de la découpe suivant le plan sécant 7 (figure 27). Pour ce faire, la scie circulaire 4 est disposée dans le plan sécant 8 pour réaliser l'entaille 15 espacée de l'extrémité 10 de la pièce de bois 1 d'une distance supérieure au diamètre de la scie 3, tandis que la scie circulaire 4′, de même diamètre que la scie 4 et coaxiale à cette dernière, qui réalise l'entaille 13, est montée sur l'arbre 11 de la scie 4 à une distance de cette dernière qui est inférieure à la dimension e″″ (figure 29) de la partie libre de la scie 3. Lorsque les entailles 13 et 15 sont réalisées dans la pièce de bois 1 par les scies 4 et 4′ , et que la pièce de bois est toujours entraînée suivant la flèche 6, la scie 3 attaque la pièce de bois (1) à partir de son extrémité 10 (figure 25) pour amorcer l'entaille de la découpe 2 parallèle à l'axe longitudinal 5 de la pièce de bois 1. Le mouvement de la pièce de bois 1 suivant cette flèche 6 est interrompu avant que les moyens 9 de la scie 3 entrent en contact avec la pièce de bois et la scie 3 est alors déplacée, avec la pièce de bois immobile suivant l'axe longitudinal 5 de cette dernière et suivant la flèche 22. La scie 3 est guidée par des moyens 20 pour que ses moyens 9 se déplacent parallèlement à la pièce de bois 1 et entraînée par des moyens 21, tels qu'un vérin, vers l'entaille 15 pour tout d'abord éliminer la portion de bois 12 comprise entre l'ext'émité 10 du bois et l'entaille 13 et attaquer la portion de bois 14 comprise entre lesdites entailles 13 et 15 (figure 27). Lorsque la périphérie de la scie 3 atteint le plan sécant 8, le mouvement de la scie 3 suivant la flèche 22 est interrompu et le mouvement de la pièce de bois 1 suivant la flèche 6 est déclenché. Dès que la portion de bois 14 comprise entre lesdites entailles 13 et 15, avec les moyens 9 de la scie 4 stationnaires, est éliminée par la scie 3, la pièce de bois poursuit son mouvement suivant la flèche 6 et la scie 3 est ramenée dans sa position initiale (figure 25) , suivant la flèche 23 comme montré à la figure 29. La scie circulaire 16 est destinée à trancher l'extrémité de la pièce de bois pour obtenir l'extrémité 10 susdite perpendiculaire à l'axe longitudinal 5 de la pièce de bois.

Il doit être entendu que l'invention n'est nullement limitée aux formes de réalisation décrites et que bien des modifications peuvent être apportées à ces dernières sans sortir du cadre du présent brevet.

## Revendications

1) Procédé pour pratiquer, en particulier dans une pièce de bois (1) , une découpe (2) , à l'aide de moyens tels que scies circulaires (3,4) agencés, suivant l'axe longitudinal (5) de la pièce de bois et transversalement à cet axe, pour entailler la pièce de bois, lorsque celle-ci est mise en contact avec les scies par déplacement relatif suivant une direction perpendiculaire audit axe longitudinal (5), suivant au moins deux plans sécants (7,8) , ledit procédé étant caractérisé en ce qu'il consiste, pour réaliser une découpe (2) dont la dimension (e) prise suivant l'axe longitudinal de la pièce de bois (1) est supérieure à la dimension (e'''') de la partie libre de la scie circulaire (3) qui réalise l'entaille suivant l'axe longitudinal (5) de la pièce de bois (1), partie libre qui est en forme de couronne circulaire délimitée par la périphérie de la scie et le cercle dans lequel est inscrite la projection sur la scie (3) de ses moyens (9) de fixation et d'entraînement, à entailler la pièce de bois (1) , avant que celle-ci soit mise en contact avec les moyens (9) de fixation et d'entraînement susdits, transversalement à son axe longitudinal (5) et sur une distance (e''') qui correspond à la dimension de la découpe à pratiquer prise transversalement à cet axe longitudinal (5), suivant au moins deux plans parallèles au plan comprenant une tangente à la périphérie de la scie (3) qui s'étend perpendiculairement à l'axe longitudinal (5) de la pièce de bois, le plan parallèle le plus éloigné des moyens (9) de fixation et d'entraînement précités de la scie circulaire (3) coïncidant avec l'entaille de la découpe (2) s'étendant transversalement à l'axe longitudinal (5) susdit, la distance séparant les deux plans parallèles étant inférieure à la distance séparant les cercles intérieur et extérieur de la couronne circulaire précitée.

2) Procédé suivant la revendication 1, caractérisé en ce que dans le cas d'une découpe en bout de bois et pour réaliser une découpe (2) dont la dimension (e) prise suivant l'axe longitudinal (5) de la pièce de bois (1) qui est supérieure à la dimension (e'''') de la partie libre de la scie circulaire (3), en forme de couronne circulaire délimitée par la périphérie de la scie (3) et le cercle dans lequel est inscrite la projection sur la scie de ses moyens (9) de fixation et d'entraînement, les entailles réalisées dans la pièce de bois (1) suivant les deux plans parallèles susdits et transversalement à son axe longitudinal (5) et sur une distance (e''') qui correspond à la dimension de la découpe (2) à pratiquer prise transversalement à cet axe longitudinal (5), s'effectuent suivant, d'une part, le plan tangent au cercle extérieur de la couronne circulaire susdite et parallèle à la direction de déplacement relatif de la scie circulaire (3) précitée et de la pièce de bois (1) et, d'autre part, un plan parallèle à ce plan tangent et situé du même côté des moyens (9) de la scie (3) que ce plan tangent, entre les cercles intérieur et extérieur de la couronne circulaire, l'entaillage du bois suivant le plan tangent susdit et le plan qui lui est parallèle étant réalisé avant que les moyens (9) de fixation et d'entraînement de la scie circulaire (3), qui réalise l'entaille suivant l'axe longitudinal (5) de la pièce de bois (1) entrent en contact avec cette dernière.

3) Procédé suivant la revendication 1, caractérisé en ce qu'il consiste, dans le cas d'une découpe en bout de bois et pour réaliser une découpe (2) dont la dimension (e) prise suivant l'axe longitudinal (5) de la pièce de bois (1) qui est égale au diamètre de la scie circulaire (3) qui réalise l'entaille suivant cet axe longitudinal, à entailler la pièce de bois (1), transversalement à son axe longitudinal (5) et sur une distance (e''') qui correspond à la dimension de la découpe (2) à pratiquer prise transversalement à cet axe longitudinal (5) , suivant, d'une part, le plan tangent au cercle extérieur de la couronne circulaire susdite et parallèle à la direction de déplacement relatif de la scie circulaire (3) et de la pièce de bois (1) , et, d'autre part, deux plans parallèles à ce plan tangent et situés, de part et d'autre des moyens (9) de la scie (3), entre les cercles intérieur et extérieur de la couronne circulaire susdite, l'entaillage du bois suivant le plan tangent susdit et les deux plans qui lui sont parallèles étant réalisé avant que les moyens (9) de fixation et d'entraînement de la scie circulaire (3) , qui réalise l'entaille suivant l'axe longitudinal (5) de la pièce de bois (1) , entrent en contact avec cette dernière.

4) Procédé suivant la revendication 1, caractérisé en ce qu'il consiste, dans le cas d'une découpe en bout de bois et pour réaliser une découpe (2) dont la dimension (e) prise suivant l'axe longitudinal (5) de la pièce de bois qui est supérieure au diamètre de la scie circulaire (3) qui réalise l'entaille suivant cet axe longitudinal, à entailler la pièce de bois (1), transversalement à son axe longitudinal (5) et sur une dis tance (e''') qui correspond à la dimension de la découpe (2) à pratiquer prise transversalement à cet axe longitudinal (5), suivant les deux plans parallèles précités qui sont séparés de l'extrémité du bois à partir de laquelle la découpe (2) est réalisée par une distance supérieure au diamètre de la scie circulaire (3), à entailler la pièce de bois (1) de part en part à l'aide de la scie (3) à partir de son extrémité (10) susdite, à interrompre le mouvement relatif précité de la pièce de bois (1) et de la scie (3) avant que les moyens (9) de fixation et d'entraînement de celle-ci entrent en contact avec la pièce de bois (1) jusqu'au moment où sa périphérie atteint le plan parallèle précité le plus éloigné de l'extrémité susdite de la piece de bois, à déclencher à nouveau le mouvement relatif de la pièce de bois (1) et de la sice (3) suivant la direction susdite qui est perpendiculaire à l'axe longitudinal (5) de la pièce de bois (1).

5) Procédé suivant la revendication 1, caractérisé en ce qu'il consiste , dans le cas d'une découpe (2) en plein bois et pour réaliser une découpe dont la dimension (e) prise suivant l'axe longitudinal (5) de la pièce de bois (1) qui est égale au diamètre de la scie circulaire (3), à entailler la pièce de bois, transversalement à son axe longitudinal (5) et sur une distance (e''') qui correspond à la dimension de la découpe à pratiquer prise transversalement à cet axe longitudinal (5) suivant, d'une part, deux plans tangents au cercle extérieur de la couronne circulaire susdite et parallèles à la direction de déplacement relatif de la scie circulaire (3) précitée et de la pièce de bois (1) et, d'autre part, deux plans parallèles à ces plans tangents et situés de part et d'autre des moyens (9) de la scie circulaire (3), entre les cercles intérieur et extérieur de ladite couronne circulaire, l'entaillage du bois suivant lesdits plans tangents et les plans qui leur sont parallèles étant réalisé avant que la scie circulaire (3), qui réalise l'entaille suivant l'axe longitudinal (5) de la pièce de bois (1), entrent en contact avec cette dernière.

6) Procédé suivant l'une quelconque des revendications 1 à 5 , caractérisé en ce que les entailles pratiquées dans la pièce de bois (1) transversalement à l'axe longitudinal (5) de cette dernière sont réalisées simultanément.

7) Procédé suivant la revendication 6, caractérisé en ce que les entailles pratiquées dans la pièce de bois (1) transversalement à l'axe longitudinal (5) de cette dernière sont réalisées par sciage à l'aide de scies circulaires ( 4, 4', 4'') coaxiales.

8) Procédé suivant la revendication 6, caractérisé en ce que les entailles susdites pratiquées dans la pièce de bois (1) , transversalement à l'axe longitudinal (5) de cette dernière, sont réalisées, avec évacuation du bois compris entre deux entailles immédiatement voisines, situées du même côté des moyens (9) de la scie circulaire (3) réalisant l'entaille suivant cet axe longitudinal (5), à l'aide d'une fraise (18) dont le diamètre correspond à la distance comprise entre ces deux entailles immédiatement voisines.

9) Installation pour la mise en oeuvre du procédé suivant l'une quelconque des revendications 1 à 8, caractérisée en ce qu'elle comprend une scie circulaire (3), dont l'axe (17) est perpendiculaire à l'un des deux plans sécants (7) susdits, destinée à réaliser l'entaille suivant l'axe longitudinal (5) de la pièce de bois (1) à découper, des moyens, tels que scies circulaires, ( 4,4', 4'') dont les axes (11) sont perpendiculaires à l'autre plan sécant (8), ou fraises (18), dont les axes (19) sont soit parallèles, soit perpendiculaires, à ce dernier plan sécant (8) , destinés à réaliser les entailles s'étendant transversalement à l'axe longitudinal (5) de la pièce de bois (1) et des moyens agencés pour soit déplacer la pièce de bois (1), parallèlement à elle-même et suivant une direction perpendiculaire aux axes (11,19) des scies circulaires ou fraises, vers ces dernières qui sont fixes, soit déplacer les scies ou fraises, suivant une direction perpendiculaire à l'axe longitudinal (5) de la pièce de bois (1), cette dernière étant fixe, les moyens ( 4, 4',4'', 18) réalisant les entailles transversales à l'axe longitudinal (5) de la pièce de bois (1') et la scie (3) réalisant l'entaille suivant cet axe longitudinal (5) étant décalés de manière telle que les entailles transversales à l'axe longitudinal (5) susdit sont réalisées avant que les moyens (9) de fixation et d'entraînement de la scie circulaire (3) réalisant l'entaille suivant l'axe longitudinal (5) de la pièce de bois (1) entrent en contact avec cette dernière.

10) Installation suivant la revendication 9, caractérisée en ce que les moyens ( 4, 4', 4'', 18) réalisant les entailles transversales à l'axe longitudinal (5) de la pièce de bois (1) et la scie (3) réalisant l'entaille suivant cet axe longitudinal sont fixes les uns par rapport à l'autre.

11) Installation suivant l'une ou l'autre des revendications 9 et 10, caractérisée en ce que la scie (3) réalisant l'entaille suivant l'axe longitudinal (5) de la pièce de bois (1) est agencée pour pouvoir temporairement se déplacer dans le plan sécant (7), par rapport aux moyens (4, 4', 18) et suivant une direction parallèle à l'axe longitudinal (5) de la pièce de bois (1) , des moyens (20,21) étant prévus et agencés respectivement pour , d'une part, guider la scie (3) dans ce déplacement et, d'autre part, assurer à ladite scie (3) un mouvement alternatif.

12) Installation suivant l'une quelconque des revendications 9 à 11, caractérisée en ce que les deux plans sécants (7,8) précités sont perpendiculaires, l'un (8) de ces plans étant perpendiculaire à l'axe longitudinal (5) de la pièce de bois (1) , les scies circulaires ( 4, 4', 4'') dont les axes (11) sont perpendiculaires au plan sécant (8) perpendiculaire audit axe longitudinal (5) et situés dans un plan parallèle à l'autre plan sécant (7), ayant des diamètres égaux.

13) Installation suivant la revendication 12, caractérisée en ce que les axes (11) des scies circulaires (4, 4', 4'') , qui sont perpendiculaires au plan sécant (8) perpendiculaire à l'axe longitudinal (5) de la pièce de bois (1), sont confondus.

14) Installation suivant l'une quelconque des revendications 9 à 11 , caractérisée en ce que les deux plans sécants (7,8) précités sont perpendiculaires, l'un (8) de ces plans étant perpendicualire à l'axe longitudinal (5) de la pièce de bois (1) , les fraises ( 18), dont les axes (19) sont soit parallèles, soit perpendiculaires au plan sécant (8) perpendiculaire audit axe longitudinal (5), ayant des longueurs ou diamètres tels que leur extrémité ou périphérie soit située dans un plan confondu avec l'autre plan sécant (7).

15) Installation suivant l'une quelconque des revendications 9 à 14, caractérisée en ce qu'elle comprend des moyens agencés pour régler, d'une part, la position de la scie circulaire (3) réalisant l'entaille suivant l'axe longitudinal (5) de la pièce de bois (1), suivant une direction perpendiculaire et une direction parallèle à cet axe longitudinal et, d'autre part, la position des moyens ( 4, 4', 4'', 18) réalisant les entailles s'étendant transversalement à l'axe longitudinal (5) de la pièce de bois (1) , suivant une direction perpendiculaire et une direction parallèle à cet axe longitudinal (5).

16) Installation suivant l'une quelconque des revendications 9 à 15 , caractérisée en ce qu'elle comprend des moyens agencés pour régler la position de la scie circulaire (3) réalisant l'entaille suivant l'axe longitudinal (5) de la pièce de bois (1) et la position des moyens ( 4, 4', 4'', 18) réalisant les entailles s'étendant transversalement à cet axe longitudinal afin de faire varier l'angle formé par les deux plans sécants (7,8) précités.

17) Installation suivant l'une quelconque des revendications 9 à 16, caractérisée en ce qu'elle comprend une scie circulaire (16) dont l'axe est parallèle à l'axe longitudinal (5) de la pièce de bois (1) et qui est agencée pour tronçonner l'extrémité de cette dernière avant que les diverses entailles précitées soient réalisées, cette scie circulaire (16) étant de position règlable suivant une direction parallèle à son axe, ce dernier ayant une position qui est réglable angulairement par rapport à l'axe longitudinal (5) de la pièce de bois (1).

0252056

FIG.4.

FIG.3.

FIG.2.

FIG.1.

0252056

FIG_8.

FIG_7.

FIG_6.

FIG_5.

FIG_9.

FIG_10.

0252056

FIG.11.

FIG.12.

FIG.13.

FIG.14.

0252056

FIG_16.

FIG_15.

FIG_18.

FIG_17.

0252056

FIG. 20.

FIG. 19.

FIG. 21.

FIG. 22.

FIG. 23.

FIG.24

0252056

FIG.25

FIG.26

0252056

FIG. 27

FIG. 28

FIG. 29